(19) Europäisches Patentamt
European Patent Office
Office européen des brevets

(11) Veröffentlichungsnummer : **0 172 481**
**B1**

(12) # EUROPÄISCHE PATENTSCHRIFT

(45) Veröffentlichungstag der Patentschrift : **15.06.88**

(21) Anmeldenummer : **85109809.5**

(22) Anmeldetag : **05.08.85**

(51) Int. Cl.⁴ : **C 07 C103/30**, C 07 C 87/58, C 07 C143/74, C 07 C125/065, C 08 K 5/18, C 08 K 5/20, C 08 K 5/42

(54) **Alterungsschutzmittel und diese enthaltende Polymere.**

(30) Priorität : **18.08.84 DE 3430512**

(43) Veröffentlichungstag der Anmeldung : **26.02.86 Patentblatt 86/09**

(45) Bekanntmachung des Hinweises auf die Patenterteilung : **15.06.88 Patentblatt 88/24**

(84) Benannte Vertragsstaaten : **DE FR GB IT**

(56) Entgegenhaltungen :
**EP-A- 0 028 999**
**DE-A- 3 022 952**
**DE-A- 3 113 351**
**FR-A- 2 074 630**
**GB-A- 993 435**
**US-A- 3 668 254**
**US-A- 4 263 456**

(73) Patentinhaber : **BAYER AG**
**Konzernverwaltung RP Patentabteilung**
**D-5090 Leverkusen 1 Bayerwerk (DE)**

(72) Erfinder : **Buysch, Hans-Josef, Dr.**
**Brandenburger Strasse 28**
**D-4150 Krefeld (DE)**
Erfinder : **Szentivanyi, Zsolt, Dr.**
**Carl-Rumpff-Strasse 9**
**D-5090 Leverkusen (DE)**
Erfinder : **Witte, Josef, Dr.**
**Haferkamp 10**
**D-5000 Köln 80 (DE)**

**EP 0 172 481 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Vorliegende Erfindung betrifft Verbindungen der allgemeinen Formel I

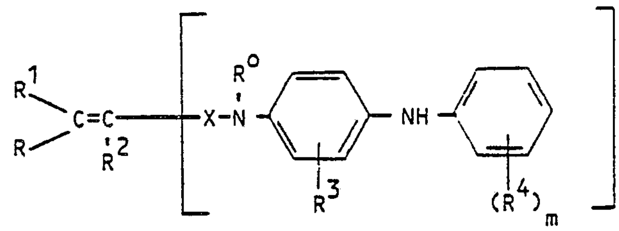

(I)

in der $R^0$ H, zusammen mit $R^1$ —CO—, wenn X —CO— ist oder zusammen mit $R^2$ —CO—, wenn X—$CH_2$—CO— ist,
ein Rest von R, $R^1$ und $R^2$ H, $C_1$-$C_4$-Alkyl, Aryl, $COOR^5$ oder, wenn $R^0$ H und X —CO—, —$CH_2$— oder —$CH_2$—O—CO— sind,

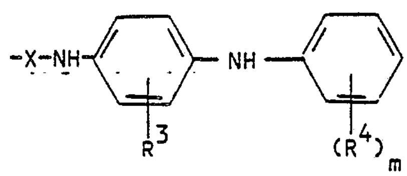

und die anderen Reste R, $R^1$ und $R^2$ H
X einen Rest

$$-(CH_2)_n-\overset{O}{\overset{\|}{C}}-,\ -(CH_2)_nSO_2-,\ -CH_2-,\ -CH_2O\overset{O}{\overset{\|}{C}}-$$

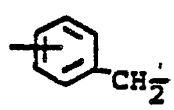 , 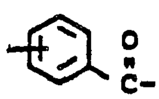 , 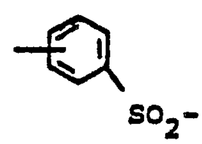

n 0 oder 1,
$R^3$ H oder $CH_3$
$R^4$ $C_7$-$C_{20}$ Aralkyl und
$R^5$ H, $C_1$-$C_4$-Alkyl oder $C_6$-$C_{12}$-Aryl und
m 1 oder 2

bedeuten, sowie Polymere, die diese Verbindungen enthalten.

Polymere werden bei Einwirkung von Licht, Luft und Hitze rasch verändert und verlieren in Folge von Abbau- und Vernetzungsvorgängen ihre guten Gebrauchseigenschaften. Daher werden den Polymeren Alterungsschutzmittel zugesetzt, die ihre Lebensdauer beträchtlich verlängern. Eine Zumischung von Alterungsschutzmitteln reicht aber häufig nicht aus, wenn Gebrauchsartikel aus solchen Polymeren mit Medien in Berührung kommen, die die Alterungsschutzmittel zu extrahieren vermögen und damit ihre Schutzfunktion erheblich beeinträchtigen oder gar aufheben. Es ist auch bekannt, daß Alterungsschutzmittel migrieren und aus den Polymeren ausschwitzen.

Man hat vorgeschlagen, in solchen Fällen, die Alterungsschutzmittel an das Polymere zu binden oder polymere Alterungsschutzmittel zu verwenden.

So wird in der DE-OS 2 025 336 beschrieben, Amide der Formel II

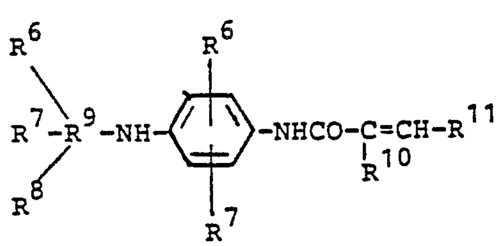

(II)

worin

$R^9$ für Aryl

$R^6$ und $R^7$ für H oder $C_1$-$C_4$-Alkyl

$R^8$ für H, $C_1$-$C_4$-Alkyl, $C_1$-$C_4$-Alkoxy oder $C_1$-$C_{13}$-Alkylamino

$R^{10}$ und $R^{11}$ für einen $C_1$-$C_2$-Alkyl- oder $C_6$-$C_{10}$-Arylrest, einen Carboxyl- oder Carboxyalkylrest stehen, vorzugsweise Acrylamide von 4-Aminodiphenylamin, mit Butadien zu polymerisieren. Solche Polymere sollen nach extraktiven Behandlungen, wie chemische Reinigung, eine bessere Beständigkeit aufweisen als Polymere, die durch bloßen Zusatz von Alterungsschutzmitteln stabilisiert sind.

Nach US-PS 3 867 334 kann man die Amide der Formel II unter besimmter Voraussetzung bei der Zugabe dieser Amide auch zur Stabilisierung von rußverstärktem, schwefelvulkanisiertem Kautschuk verwenden.

In der DE-OS 2 509 654 wird die peroxidische Pfropfung von N-4-(Phenylaminophenyl)-acrylamid

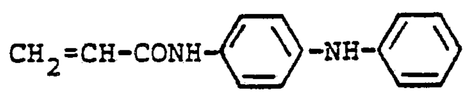

auf Naturkautschuk beschrieben.

Die DE-OS 3 022 952 beansprucht Verbindungen der allgemeinen Formel III

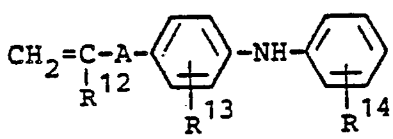

(III)

worin

$R^{12}$ H oder $CH_3$

$R^{13}$ und $R^{14}$ H, Cl, Br oder $C_{1-12}$-Alkyl und

A 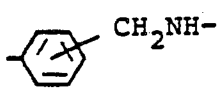 , 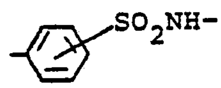 , 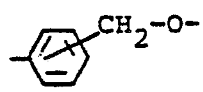

$-SO_2NH-$ oder $-CH_2-SO_2-NH-$

darstellen und kautschukartige Polymere, die diese Verbindungen chemisch gebunden enthalten und einen gewissen verbesserten Alterungsschutz unter extraktiven Bedingungen aufweisen.

Schließlich werden in der DE-OS 3 113 351 Nitrilkautschuke bestimmter Zusammensetzung mit einem Gehalt von 5-60 Gew.-% eines Vinylchloridpolymeren für hitze- und ölfeste Formkörper empfohlen, die als Stabilisatoren die Verbindungen der Formel II oder Amide der Formel IV

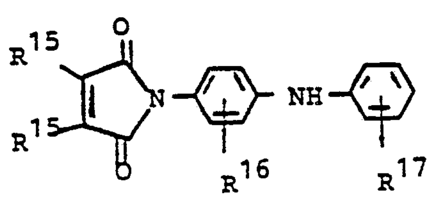

(IV)

enthalten, worin

$R^{15}$ H oder $C_{1-4}$-Alkyl

$R^{16}$ und $R^{17}$ H, Cl, Br oder $C_{1-12}$-Alkyl

sein können.

Die Anforderungen an die Beständigkeit von Kautschukteilen z. B. Dichtungen und Schläuche beim Betrieb von Verbrennungsmotoren steigen ständig wegen der Kompaktbauweise und der erhöhten Arbeitstemperaturen. Dabei zeigt sich nun, daß die Alterungsschutzwirkung der bekannten Verbindungen zwar ein brauchbares Niveau erreicht, aber durchaus verbesserungsbedürftig ist, will man durch Oxidation verursachte Schäden und Undichtigkeiten verhindern. Bei normaler Alterung unter nicht extraktiven Bedingungen erreicht sie nicht einmal die Wirkung der üblichen nicht fixierbaren Alterungsschutzmittel wie Distryldiphenylamin.

Aufgabe der Erfindung war die Bereitstellung neuer, chemisch an Polymere fixierbare Alterungsschutzmittel und diese enthaltender Polymere, die unter extraktiven Bedingungen oder in Gegenwart oxidierter Öle oder Kraftstoffe einen verbesserten Alterungsschutz zeigen.

Es wurde nun überraschend gefunden, daß die eingangs genannten Verbindungen der Formel I den gewünschten verbesserten Alterungsschutz gewähren. Bevorzugt sind Verbindungen der Formel I, worin

$R^0$ H, zusammen mit $R^1$ —CO—, wenn W —CO— ist,
R H, $CH_3$,
$R^1$ H, $CH_3$, Phenyl, $COOR^5$,

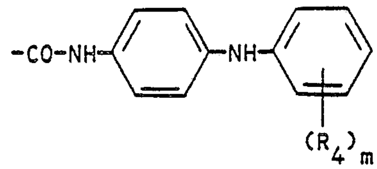

$R^2$ H, $CH_3$,
X CO, $CH_2$, $SO_2$, $CH_2SO_2$, $CH_2O\overset{\overset{O}{\|}}{C}$
$R^3$ H,
$R^4$ $C_{7-18}$ Aralkyl,
$R^5$ H oder $C_{1-4}$ Alkyl und
m 1 oder 2 bedeuten.

Besonders bevorzugt sind solche Verbindungen der Formel I worin

$R^0$, R und $R^3$ H,
$R^1$ H, Phenyl, $COOR^5$,
$R^2$ H, $CH_3$,
X CO, $CH_2$
$R^4$ $C_{7-13}$ Aralkyl,
$R^5$ H, $C_1$-$C_4$ Alkyl und
m 1 oder 2 bedeuten.

Die erfindungsgemäßen Verbindungen der Formel I werden hergestellt, indem man 4-Aminodiphenylaminderivate der allgemeinen Formel V

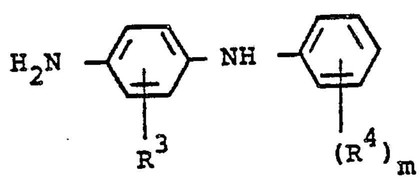

(V)

worin $R^3$, $R^4$ und m die vorstehend genannte Bedeutung haben, mit Verbindungen der allgemeinen Formel VI umsetzt,

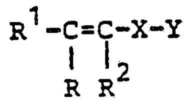

(VI)

worin R, $R^1$, $R^2$ und X die vorstehend genannte Bedeutung haben und Y für Cl zusammen mit $R^1$ für —CO—O, wenn X—CO ist, zusammen mit $R^2$ für —CO—, wenn X—$CH_2$—CO ist oder für $OR^5$ steht, wobei $R^5$ die vorstehend genannte Bedeutung hat.

Die Aralkylgruppe $R^4$ steht vorzugsweise in der p-Stellung ; allerdings enthalten die Produkte auch immer gewisse Anteil an o-Verbindung.

Die Herstellung der erfindungsgemäßen Verbindungen I durch Umsetzung der 4-Aminodiphenylaminderivate V mit den ungesättigten Verbindungen VI kann nach an sich bekannten Verfahren auf verschiedene Weise erfolgen :

1) durch Acylierung von V mit den reaktiven Säurechloriden (z. B. VI mit X=CO oder $SO_2$ und Y=Cl) in Gegenwart von Basen wie Natriumhydroxid im Zweiphasensystem nach Schotten-Baumann, in Gegenwart von tertiären Aminen oder Alkalimetallcarbonaten und katalytischen Mengen tertiären Amine entsprechend der in US-PS 3 852 350 oder DE-OS 3 022 952 beschriebenen Methode ;

2) durch Aminolyse von Estern des Typs VI (z. B. X=CO, Y=$OCH_3$ oder o-Phenyl) mit Aminen V beispielsweise unter Mitverwendung von Alkoholaten nach J. Org. Chem. 28 (1963) S. 2915 bis 2917 ;

3) durch ringöffnende Acylierung von Aminen V mit Säureanhydriden VI (z. B. X=CO, $Y+R^1=OCO$) analog Ber. Deut. Chem. Ges. 20, 3214 (1887),

4) durch Ringschluß von den unter 3) erhaltenen Halbamiden I (z. B. $R^1=COOH$, X=CO) unter wasserentziehenden Bedingungen zu den entsprechenden Imiden, analog L.H. Flett u. W.H. Gardner: Maleic Anhydrid Derivativs. John Wiley a. Sons 1952 S. 106 f und Houben-Weyl, Methoden der organ. Chem. Bd. 11/2 S. 16 ff 4. Aufl. 1958,

5) durch Alkylierung von Aminen V mit Alkylierungsmitteln VI (z. B. $X=CH_2$, Y=Cl oder X=

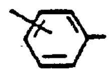 $-CH_2-$ , Y = Cl)

entsprechend DE-OS 3 022 952.

Die auf diesen Wegen zugänglichen neuen Alterungsschutzmittel können durch Umkristallisation und gegebenenfalls Zusatz von Adsorbentien wie Aktivkohle oder aktiven Tonerden gereinigt werden. Häufig jedoch werden sie als Rohprodukte eingesetzt.

Die neuen Alterungsschutzmittel der Formel (I) können auf mehreren Wegen an Polymere angebunden werden, nämlich während der radikalischen Polymerisation der untengenannten Monomeren, vorzugsweise durch Pfropfung auf fertige Polymerisate, besonders bevorzugt aber während der Härtung und Vulkanisation der Polymeren.

Diese Reaktionen werden nach an sich bekannten Verfahren in Gegenwart der Verbindungen I in Masse, Emulsion, Lösung oder Dispersion, die Härtung oder Vulkanisation unter den üblichen Bedingungen und in Anwesenheit der bekannten Härtungs- und Vulkanisationssysteme durchgeführt. Die Menge an Alterungsschutzmittel beträgt 0,2-10 Gew.-%, bevorzugt 0,5-5 Gew.-%, bezogen auf das Polymere.

Die erfindungsgemäßen Alterungsschutzmittel I können auch nach bekannten Verfahren mit Vinylmonomeren zu Mischpolymerisaten mit Molgewichten von 1 000-30 000 mit einem erhöhten Gehalt von 5-70 Gew.-% bevorzugt 10-60 Gew.-% an I umgesetzt werden.

Ferner können die Alterungsschutzmittel I auch auf Polymere mit Molgewichten von 1 000 bis 30 000 (Zahlenmittel), vorzugsweise von 2 000 bis 20 000 aufgepfropft werden, so daß die Polymere einen Gehalt von 10 bis 60 Gew.-%, vorzugsweise von 10 bis 50 Gew.-% an gebundenem Alterungsschutzmittel enthalten. Derartige Verbindungen werden dann den hochmolekularen Polymeren zugesetzt und bilden ebenfalls migrationsfeste und schwer extrahierbare wirksame polymere Alterungsschutzmittel. Sie werden in solchen Mengen den hochmolekularen Polymeren zugesetzt, daß die vorstehend genannten Konzentrationen an Alterungsschutzmittel im Gesamtpolymer erhalten werden. Dazu werden die das Alterungsschutzmittel gebunden enthaltenden Polymeren mit niederem Molgewicht in Mengen von 1-25, bevorzugt 4-20 Gew.-%, bezogen auf die hochmolekularen Polymeren, eingesetzt.

Geeignete Polymere mit niedrigen Molgewichten für derartige Pfropfreaktionen sind beispielsweise Polybutadiene, Polyisoprene, Mischpolymere von Butadien und/oder Isopren mit Styrol, Acrylnitril, Methylmethacrylat, Ethylacrylat, α-Methylstyrol, Piperylen, Hexadien-1,3, Ethylen, Propylen und Vinylacetat.

Geeignete Vinylmonomere zur Herstellung der Mischpolymerisate sind die gleichen, wie sie vorstehend bereits genannt wurden.

Die Pfropfung der Alterungsschutzmittel auf die Polymeren erfolgt unter radikalischen Bedingungen, beispielsweise in Gegenwart bekannter Radikalstarter wie tert.-Butylperpivalat, Dicumylperoxid, Di-tert.-butylperoxid oder Azodiisobutyronitril unverdünnt oder in inerten Lösungsmitteln wie Toluol, Xylol, Benzin, Chlorbenzol oder Dichlorbenzol bei Temperaturen zwischen 50 und 200 °C, bevorzugt 70-180 °C.

Die neuen Alterungsschutzmittel eignen sich für eine breite Palette von Kautschuken und Kunststoffen, insbesondere aber für Kautschuke, z. B. für Polymere aus 1,3-Dienen wie Butadien, Isopren, Piperylen, 2-Chlorbutadien, 2-Ethyl-butadien und deren Copolymere mit Vinylmonomeren, wie Styrol, p-Methylstyrol, α-Methylstyrol, Norbornen, Norbornadien, Acrylsäure, Acrylsäureester und -amide, Acrylnitril, Ethylen, Propylen und Vinylacetat, für Polyalkenamere, beispielsweise aus Cyclopenten oder 1,5-Cyclooctadien, und für Polymere aus 1-Olefinmischungen, beispielsweise aus Ethylen/Propylen oder Ethylen/Propylen/Dien mit isolierten Doppelbindungen. Solche Polymeren können durch radikalische, koordinative, metathetische oder ionische Polymerisation entstanden sein.

Beispiele derartiger Polymere sind: BR, Naturkautschuk, SBR-, NBR-, EPDM- und CR-Kautschuk, Polypentenamer, ferner Polyethylen, Polypropylen oder Polystyrol mit geringen Gehalten an Doppelbindungen, schließlich auch ein- oder mehrphasige Polymermischungen, wie ABS oder Polystyrol, Polyethylen, Polypropylen, bevorzugt aber Doppelbindungen enthaltende Polymerisate.

Besonders wirkungsvoll sind die Alterungsschutzmittel bei Nitrilkautschuk.

Die Kautschuke können vulkanisiert sein.

Eine weitere Verbesserung der Bruchdehnung kann durch Zusatz von 5 bis 15 Gew.-%, bezogen auf Kautschukfeststoff, oligomerer Thioether, beispielsweise Etherthioether, wie Vulkanol 85® der Bayer AG, Leverkusen, erzielt werden.

Synthese der Amine V

Beispiel 1

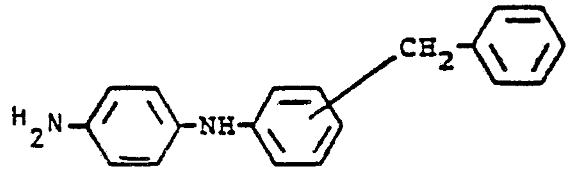

Zu einem Gemisch von 184 g (1,0 Mol) 4-Aminodiphenylamin und 20 g säureaktivierter Bleicherde wurden unter Rühren und Stickstoff bei 200 °C 216 g (2 Mol) Benzylalkohol in 1 h zugetropft. Man hielt noch 3 h bei 200 °C, filtrierte nach Verdünnen mit Toluol durch eine Drucknutsche, dampfte das Filtrat ein und destillierte unter vermindertem Druck nicht umgesetzte Ausgangsprodukte und schließlich bei 230-260 °C/0,6-1,0 mbar 280 g einer Fraktion, die neben dem benzylsubstituierten 4-Aminodiphenylamin geringe Mengen der dibenzylsubstituierten Verbindung enthielt.

Beispiel 2

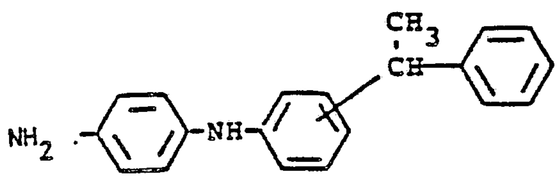

Zu einem Gemisch von 184 g (1,0 Mol) 4-Aminodiphenylamin und 20 g säureaktivierter Bleicherde wurden bei 200 °C unter Rühren und Stickstoff in 2 h 208 g (2,0 Mol) Styrol zugetropft und das Gemisch noch 1 h bei 200 °C gehalten. Nach Verdünnen mit Toluol wurde durch eine Drucknutsche filtriert, das Filtrat unter vermindertem Druck destilliert und von Lösungsmittel und nicht umgesetzten Ausgangsprodukten befreit. Schließlich gingen bei 220-243 °C/0,2-0,3 mbar 286 g der gewünschten Verbindung über.

Beispiel 3

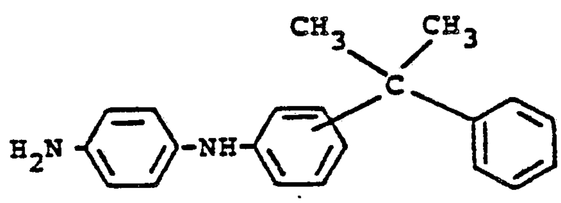

und

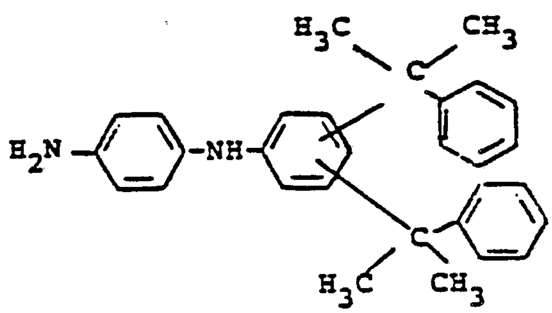

Zu einem Gemisch von 800 g (4,35 Mol) 4-Aminodiphenylamin und 80 g säureaktivierter Bleicherde tropfte man unter Rühren und stickstoff bei 200 °C in 2 h 1 025 g (8,7 Mol) α-Methylstyrol, hielt noch 1 h bei 200 °C, filtrierte das mit Toluol verdünnte Reaktionsgemisch durch eine Drucknutsche und destillierte das Filtrat unter vermindertem Druck, wobei zunächst Lösungsmittel und nicht umgesetzte Ausgangsprodukte übergingen, dann folgte bei 236-255 °C/0,3 mbar eine Fraktion I (787 g), die im wesentlichen aus monoalkylierten Verbindungen bestand und dann bei 268-288 °C/0,3-0,5 mbar eine Fraktion II (530 g), die im wesentlichen aus der dialkylierten Verbindung bestand.

Beispiel 4

Beispiel 3 wurde wiederholt, das rohe Reaktionsprodukt nach Abtrennung von nicht umgesetzten Ausgangsprodukten jedoch nicht fraktioniert destilliert, sondern ohne weitere Reinigung eingesetzt.

Synthese der Alterungsschutzmittel I

Beispiel 5

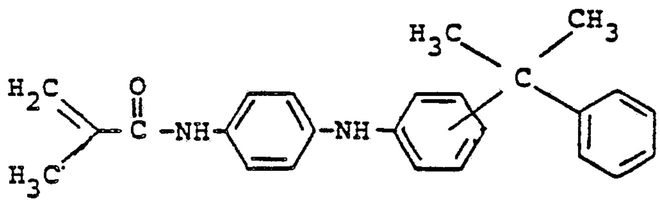

147 g (0,47 Mol) der Fraktion I aus Beispiel 3 wurden in 500 ml Xylol gelöst. Dazu gab man 74,4 g wasserfreies Natriumcarbonat und 1 g Triethylamin, rührte diese Suspension ca. 1 h bei 40 °C und tropfte dann bei 20 °C in ca. 30-40′ 54 g (0,52 Mol) Methacrylsäurechlorid zu, das in ca. 50 ml Xylol gelöst war. Nach 2 h bei 20-30 °C wurde auf 45-50 °C erwärmt für 2-3 h, mit Wasser heiß extrahiert und die organische Phase nach Trocknen unter vermindertem Druck eingedampft. Der Rückstand betrug 178 g Fp. 105-106 °C Toluol/Petrolether). Das NMR-Spektrum stimmt mit der obigen Struktur überein.

Beispiel 6

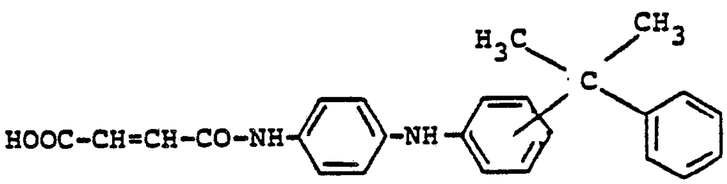

151 g (0,5 Mol) der Fraktion I aus Beispiel 3 wurden in 800-900 ml Toluol gelöst und dazu bei ca. 35-40 °C 49 g (0,5 Mol) Maleinsäureanhydrid gelöst in 200 ml Toluol in 2 h hinzugetropft. Die Suspension noch 2 h bei 40 °C gerührt, abgesaugt, die Kristalle mit Toluol und Petrolether nachgewaschen und getrocknet : 186 g Fp. 179-181 °C. Das NMR-Spektrum stimmt mit der obigen Struktur überein.

Beispiel 7

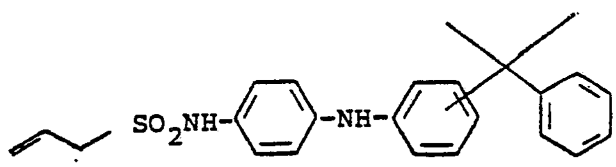

Zu einem Gemisch von 78 g (0,25 Mol) der Fraktion I aus Beispiel 3, 25 g (0,25 Mol) Triethylamin und 200 ml Toluol tropft man unter Rühren und Stickstoff bei 50-60 °C in 2 h 35 g (0,25 Mol) Allylsulfonsäurechlorid. Nach einer weiteren Stunde bei 50-60 °C wird abgesaugt und der Filterkuchen mit Toluol gewaschen. Die vereinigten Filtrate werden mit Wasser gewaschen, getrocknet und im Vakuum von Toluol befreit. Man erhält 99 g eines dickflüssigen braunen Öles, dem nach NMR-Analyse die obige Struktur zukommt.

Beispiel 8

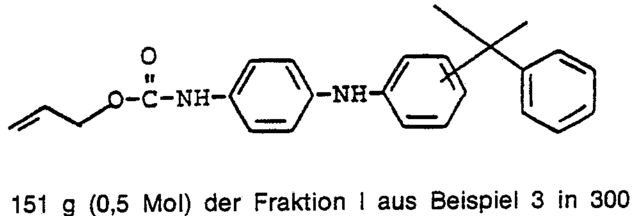

Zu einer Lösung von 151 g (0,5 Mol) der Fraktion I aus Beispiel 3 in 300 ml Toluol tropft man gleichzeitig aus zwei separaten Tropftrichtern unter Rühren und Stickstoff bei 20-25 °C 60 g (0,5 Mol) Chlorameisensäureallylester in 100 ml Toluol und 22 g (0,55 Mol) Natriumhydroxid in 50 ml Wasser in 60 bis 70 Minuten. Nach weiteren 2-3 h Rühren bei Raumtemperatur wird mit Wasser verdünnt, die wäßrige Phase abgetrennt, die organische Phase mit Wasser mehrmals gewaschen, getrocknet und eingedampft.

Man erhält 193 g eines dunklen Harzes, das nach NMR- und Elementaranalyse der obigen Struktur entspricht.

### Beispiel 9

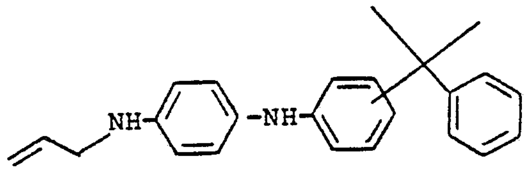

Zu einer Mischung aus 151 g (0,5 Mol) der Fraktion I aus Beispiel 3 und 200 ml Propylenglykol tropft man über 1-2 h unter Rühren und Stickstoff bei 100 °C gleichzeitig aus zwei separaten Tropftrichtern 38 g (0,5 Mol) Allylchlorid und 20 g (0,5 Mol) Natriumhydroxid in 200 ml Propylenglykol. Nach einstündiger Nachreaktion bei 100 °C destilliert man im Wasserstrahlvakuum die Hauptmenge an Lösungsmittel ab, gibt dann Wasser und Toluol hinzu, trennt die Phasen, wäscht die organische mehrmals mit Wasser, trocknet sie und destilliert das Toluol im Vakuum ab.

Man erhält 169 g eines dunklen, dickflüssigen Harzes, dem nach NMR- und Elementaranalyse die obige Struktur zukommt.

### Beispiel 10

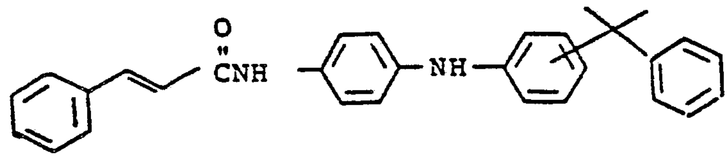

Analog Beispiel 8 wurden 84 g (0,5 Mol) Zimtsäurechlorid anstelle des Chlorameisensäureallylesters umgesetzt. Nach dem Verdünnen mit Wasser wird filtriert, der Filterkuchen mit Wasser und Toluol gewaschen und getrocknet. Man erhält 147 g gelber Kristalle vom Schmelzpunkt 184-186 °C, deren Analyse obiger Formel entspricht.

### Vergleichsbeispiel 1

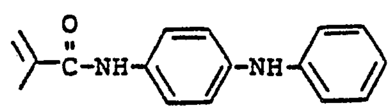

Analog Beispiel 5 wurden 92 g (0,5 Mol) 4-Aminodiphenyl-amin mit Methacrylsäurechlorid umgesetzt. Man erhielt 95 g, Fp. 98-101 °C.

## Anwendungsversuche

### Beispiel 11

Ein NBR-Kautschuk aus 72 Gew.-% Butadien und 28 Gew.-% Acrylnitril wurde nach folgender Rezeptur in Anwesenheit von erfindungsgemäßen und bekannten Alterungsschutzmittel vulkanisiert :

| | |
|---|---|
| 100,0 Gew.-Tle. | NBR |
| 1,5 Gew.-Tle. | Mercaptosilan |
| 30,0 Gew.-Tle. | gefällte Kieselsäure |
| 0,75 Gew.-Tle. | Stearinsäure |
| 3,0 Gew.-Tle. | Zinkoxid |
| 2,5 Gew.-Tle. | eines Gemisches aus Fettsäure und Fettsäureestern |
| 30,0 Gew.-Tle. | Kaolin calciniert |
| 0,25 Gew.-Tle. | Schwefelgranulat 80 %ig |
| 2,5 Gew.-Tle. | Tetramethylthiuramdisulfid |
| 2,0 Gew.-Tle. | Dibenzothiazyldisulfid |
| 4,0 Gew.-Tle. | Mercaptobenzthiazol-Zinksalz |
| 10,0 Gew.-Tle. | eines Thioethers |
| 1,5 Gew.-Tle. | Alterungsschutzmittel A—C |

A = Produkt aus Vergleichsbeispiel 1

B = Produkt aus Beispiel 5

C = Distyryl-diphenylamin

| | A | B | C |
|---|---|---|---|
| Mooney Scorch 120°C (min) | 16,0 | 15,5 | 16,5 |
| Vulkameter $t_{10}$ (min) | 2,4 | 2,4 | 2,4 |
| 170°C $t_{10}$ (min) | 3,6 | 3,4 | 3,5 |
| Vulkanisation 20' 170°C Normstab II | | | |
| Zugfestigkeit (MPa) | 18,8 | 17,5 | 19,4 |
| Bruchdehnung % | 580 | 565 | 595 |
| Härte RT Shore A | 61 | 59 | 59 |
| Heißluftalterung bei 150°C Zellofen | | | |
| Restbruchdehnung % nach 3 Tagen | 90 | 100 | 97 |
| Restbruchdehnung % nach 5 Tagen | 62 | 70 | 67 |
| Alterung in Kraftstoff C Vakuum 48 h 40°C | 48 h 40°C, Rücktrocknung im Heißluftalterung bei 135°C Zellofen | | |
| Restbruchdehnung % nach 7 Tagen | 66 | 75 | 10 |
| Restbruchdehnung % nach 11 Tagen | 53 | 62 | 2 |

Aus den Messungen ergibt sich

1) daß Alterungsschutzmittel A, entsprechend US-PS 3 867 334, weniger wirksam ist als das handelsübliche Alterungsschutzmittel C bei der normalen Heißluftalterung ohne Extraktion und

2) weniger wirksam ist als Alterungsschutzmittel B bei der normalen Heißluftalterung und bei der Alterung nach Extraktion und

3) daß Alterungsschutzmittel B auch bei der normalen Heißluftalterung ohne Extraktion dem herkömmlichen Produkt C überlegen ist.

**Patentansprüche**

1. Verbindungen der Formel

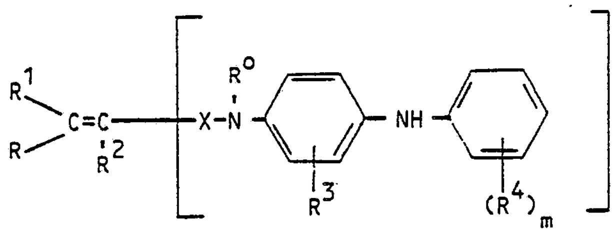

in der $R^0$ H oder zusammen mit $R^1$ —CO—, wenn X —CO— ist, oder zusammen mit $R^2$ —CO—, wenn X —$CH_2$—CO— ist,
ein Rest von R, $R^1$ und $R^2$, H, $C_1$-$C_4$-Alkyl, Aryl, $COOR^5$ oder, wenn $R^0$ H und X —CO—, —$CH_2$— oder —$CH_2$—O—CO— sind,

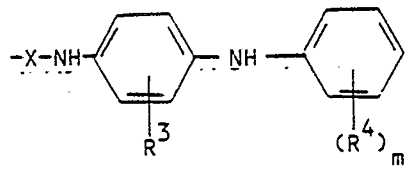

und die anderen Reste R, $R^1$ und $R^2$ H

$R^3$ H oder $CH_3$

$R^4$ $C_{7-20}$ Aralkyl

$R^5$ H, $C_{1-4}$-Alkyl oder $C_{6-12}$ Aryl

X einen Rest $-(CH_2)_nCO-$, $-(CH_2)_nSO_2$, $-CH_2-$, $-CH_2O-CO-$

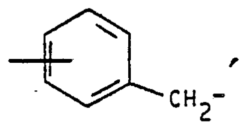 , 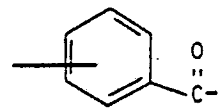 , 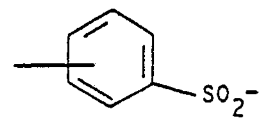

m 1 oder 2 und n 0 oder 1 bedeuten.

2. Verbindungen nach Anspruch 1, worin

$R^0$ H oder zusammen mit $R^1$ —CO—, wenn X —CO— ist,

R H, $CH_3$,

$R^1$ H, $CH_3$, Phenyl, $COOR^5$,

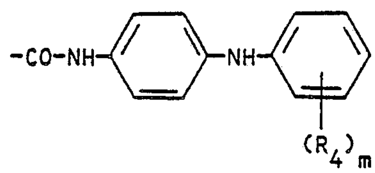

$R^2$ H, $CH_3$,

$R^3$ H,

$R^4$ $C_{7-18}$ Aralkyl,

$R^5$ H oder $C_{1-4}$ Alkyl

X CO, $CH_2$, $SO_2$, $CH_2SO_2$, $CH_2O\overset{O}{\overset{\|}{C}}$

m 1 oder 2 und

n 0 oder 1

bedeuten.

3. Verbindungen nach Anspruch 1 und 2 worin

$R^0$, R und $R^3$ H,

$R^1$ H, Phenyl oder $COOR^5$,

$R^2$ H, $CH_3$,

$R^4$ $C_{7-13}$ Aralkyl,

$R^5$ H, $C_{1-4}$ Alkyl,

X CO oder $CH_2$ und

m 1 oder 2 bedeuten.

4. Polymere enthaltend Verbindungen nach Anspruch 1.

5. Kautschuke und Vulkanisate der Kautschuke enthaltend Verbindungen nach Anspruch 1.

6. Nitrilkautschuke und Vulkanisate von Nitrilkautschuken enthaltend Verbindungen nach Anspruch 1.

7. Polymere nach Anspruch 6 enthaltend 0,2-10 Gew.-% an Verbindungen nach Anspruch 1.

## Claims

1. Compounds corresponding to the following formula :

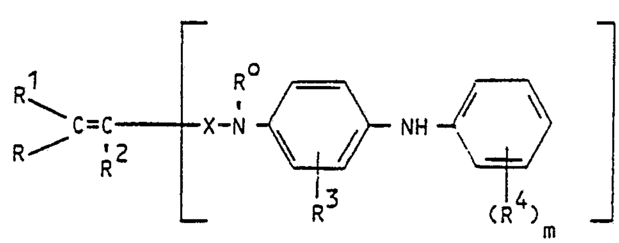

wherein $R^0$ denotes H or, together with $R^1$, it denotes —CO— when X is —CO— or together with $R^2$ it denotes —CO— when X is $—CH_2—CO—$,
one of the groups R, $R^1$ and $R^2$ denotes H, $C_1$ to $C_4$ alkyl, aryl or $COOR^5$ or, when $R^0$ is H and X is —CO—, $—CH_2—$ or $—CH_2—O—CO—$, one of said groups R, $R^1$ and $R^2$ denotes

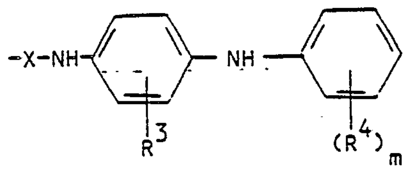

while the remaining groups of R, $R^1$ and $R^2$ denote H,
$R^3$ denotes H or $CH_3$,
$R^4$ denotes $C_{7-20}$ aralkyl,.
$R^5$ denotes H, $C_{1-4}$ alkyl or $C_{6-12}$ aryl,
X denotes a group corresponding to the formula $—(CH_2)_nCO—$, $—(CH_2)_nSO_2$, $—CH_2—$, $—CH_2O—CO—$,

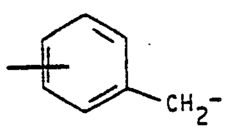 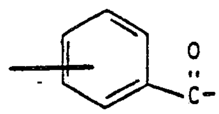 or 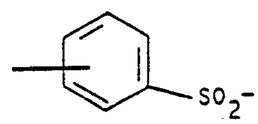

and
m stands for 1 or 2 and n stands for 0 or 1.

2. Compounds according to Claim 1, wherein
$R^0$ denotes H or, together with $R^1$, it denotes —CO— when X is —CO—,
R denotes H or $CH_3$,
$R^1$ denotes H, $CH_3$, phenyl, $COOR^5$ or

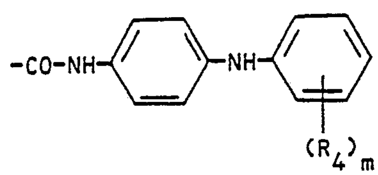

$R^2$ denotes H or $CH_3$,
$R^3$ denotes H,
$R^4$ denotes $C_{7-18}$ aralkyl,
$R^5$ denotes H or $C_{1-4}$ alkyl,
X denotes CO, $CH_2$, $SO_2$, $CH_2SO_2$ or $CH_2O\overset{O}{\overset{\|}{C}}$,
m denotes 1 or 2 and
n denotes 0 or 1.

3. Compounds according to Claims 1 and 2, wherein
$R^0$ denotes R and $R^3$ denotes H,
$R^1$ denotes H, phenyl or $COOR^5$,
$R^2$ denotes H or $CH_3$,
$R^4$ denotes $C_{7-13}$ aralkyl,
$R^5$ denotes H or $C_{1-4}$ alkyl,
X denotes CO or $CH_2$ and
m denotes 1 or 2.

4. Polymers containing compounds according to Claim 1.

5. Rubbers and vulcanisates of rubbers containing compounds according to Claim 1.

6. Nitrile rubbers and vulcanisates of nitrile rubbers containing compounds according to Claim 1.

7. Polymers according to Claim 6, containing from 0.2 to 10 % by weight of compounds according to Claim 1.

**Revendications**

1. Composés de formule

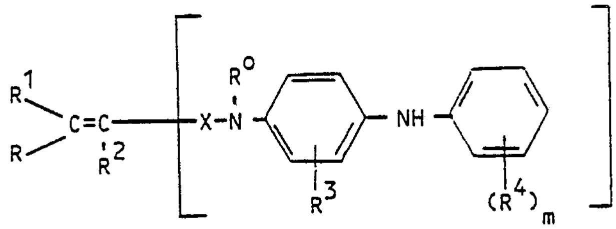

dans laquelle $R^0$ représente H ou forme avec $R^1$ un groupe —CO— lorsque X représente —CO— ou bien, avec $R^2$, un groupe —CO— lorsque X représente $—CH_2—CO—$,
l'un des symboles R, $R^1$ et $R^2$ représente H, un groupe alkyle en $C_1$-$C_4$, aryle, $COOR^5$ ou bien encore, lorsque $R^0$ représente H et que X représente —CO—, $—CH_2—$ ou $—CH_2—O—CO—$, un groupe

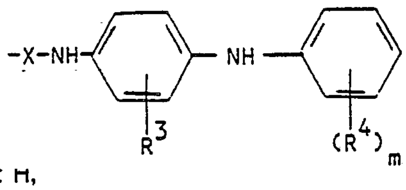

et les deux autres représentent H,
$R^3$ représente H ou $CH_3$,
$R^4$ représente un groupe aralkyle en $C_7$-$C_{20}$,
$R^5$ représente H, un groupe alkyle en $C_1$-$C_4$ ou aryle en $C_6$-$C_{12}$,
X représente un groupe $—(CH_2)_nCO—$, $—(CH_2)_nSO_2$, $—CH_2—$, $—CH_2O—CO$,

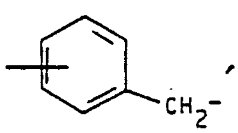 , 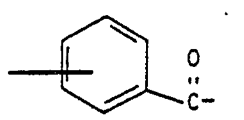 , 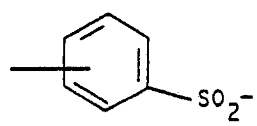

m est égal à 1 ou 2 et n est égal à 0 ou 1.

2. Composés selon la revendication 1, dans lesquels
$R^0$ représente H ou forme avec $R^1$ le groupe —CO— lorsque X représente —CO—,
R représente H, $CH_3$,
$R^1$ représente H, $CH_3$, un groupe phényle, $COOR^5$,

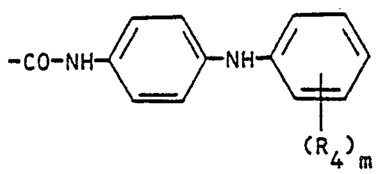

$R^2$ représente H, $CH_3$,
$R^3$ représente H,
$R^4$ représente un groupe aralkyle en $C_7$-$C_{18}$,
$R^5$ représente H ou un groupe alkyle en $C_1$-$C_4$,
X représente CO, $CH_2$, $SO_2$, $CH_2SO_2$, $CH_2O\overset{O}{\overset{\parallel}{C}}$,
m est égal à 1 ou 2, et
n est égal à 0 ou 1.

3. Composés selon les revendications 1 et 2, dans lesquels
$R^0$, R et $R^3$ représentent H,
$R^1$ représente H, un groupe phényle ou $COOR^5$,
$R^2$ représente H, $CH_3$,
$R^4$ représente un groupe aralkyle en $C_7$-$C_{13}$,
$R^5$ représente H, un groupe alkyle en $C_1$-$C_4$,
X représente CO ou $CH_2$, et
m est égal à 1 ou 2.

4. Polymères contenant des composés selon la revendication 1.

5. Caoutchoucs et vulcanisats de caoutchoucs contenant des composés selon la revendication 1.

6. Caoutchoucs nitrile et vulcanisats de caoutchoucs nitrile contenant des composés selon la revendication 1.

7. Polymères selon la revendication 6, contenant de 0,2 à 10 % en poids de composés selon la revendication 1.